(19) Europäisches Patentamt
European Patent Office
Office européen des brevets

(11) **EP 3 917 839 B1**

(12) **EUROPÄISCHE PATENTSCHRIFT**

(45) Veröffentlichungstag und Bekanntmachung des Hinweises auf die Patenterteilung:
**18.01.2023 Patentblatt 2023/03**

(21) Anmeldenummer: **20768594.2**

(22) Anmeldetag: **09.09.2020**

(51) Internationale Patentklassifikation (IPC):
*G01G 13/24* (2006.01)    *G05B 19/042* (2006.01)
*B65B 1/32* (2006.01)    *B01F 33/84* (2022.01)
*B01F 35/88* (2022.01)

(52) Gemeinsame Patentklassifikation (CPC):
**G01G 13/241; B01F 33/84; B01F 35/881; G05B 19/042**

(86) Internationale Anmeldenummer:
**PCT/EP2020/075135**

(87) Internationale Veröffentlichungsnummer:
**WO 2021/052824 (25.03.2021 Gazette 2021/12)**

(54) **VERFAHREN ZUR DOSIERUNG EINER ZIELKOMPONENTE**

METHOD FOR DOSING A TARGET COMPONENT

PROCÉDÉ DE DOSAGE D'UN COMPOSANT CIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.09.2019 DE 102019214156**

(43) Veröffentlichungstag der Anmeldung:
**08.12.2021 Patentblatt 2021/49**

(73) Patentinhaber: **Hüttlin GmbH**
**79650 Schopfheim (DE)**

(72) Erfinder:
• **AZHER, Syed Muhammad Mushahid**
**79576 Weil Am Rhein (DE)**
• **GEBAUER, Christian**
**79400 Kandern (DE)**
• **PAASCHE, Christian Karl**
**79713 Bad Säckingen (DE)**
• **MICHAELIS, Marc**
**79539 Lörrach (DE)**
• **HEMMING, Isabelle**
**79650 Schopfheim (DE)**

(74) Vertreter: **DREISS Patentanwälte PartG mbB**
**Friedrichstraße 6**
**70174 Stuttgart (DE)**

(56) Entgegenhaltungen:
**DE-A1- 19 512 416    US-A1- 2009 199 186**

**Beschreibung**

Stand der Technik

Die vorliegende Erfindung betrifft ein Verfahren zur Dosierung einer Zielkomponente gemäß US 2009/199186 A1.

Aus der DE 10 2006 054 604 A1 ist eine Verpackungsmaschine zum Verpacken von feinkörnigem Gut in Verpackungen bekannt, umfassend eine Produktzuführeinheit, eine Dosiereinrichtung, ein Aufnahmegefäß sowie eine Waage. Es ist eine Regelungseinrichtung vorgesehen, welche mit der Waage und der Dosiereinrichtung verbunden ist, um in Abhängigkeit von dem durch die Waage ermittelten Gewicht die dosierte Menge zu regeln. Es ist Aufgabe der vorliegenden Erfindung, die Genauigkeit insbesondere bei einer Dosierung mehrerer Komponenten weiter zu verbessern. Diese Aufgabe wird gelöst durch die Merkmale des unabhängigen Anspruchs 1.

Offenbarung der Erfindung Das erfindungsgemäße Verfahren zur Dosierung einer Zielkomponente hat demgegenüber den Vorteil, dass eine genauere Dosierung einer Komponente in einem Gemisch automatisiert vorgenommen werden kann. Insbesondere ein Überdosieren einer einzelnen Komponente in einem Gemisch kann verhindert werden. Gerade bei der Herstellung von Gemischen kommt es nicht selten zu einer Einwaage der einzelnen Komponenten, die zwar innerhalb der vorgegebenen Toleranzen liegen, jedoch nicht dem jeweiligen Soll-Gewicht entsprechen. Mit dem erfindungsgemäßen Verfahren kann verhindert werden, dass ein resultierendes Verhältnis der Komponenten vom Sollwert abweicht. So spielt in vielen Fällen die resultierende Gesamtmasse keine so große Rolle wie das Verhältnis der einzelnen Komponenten zueinander, sodass erfindungsgemäß eine Korrektur zugunsten eines präzisen Verhältnisses vorgenommen wird. Eine bereits erfolgte Einwaage muss nicht verworfen werden, indem alle Komponenten bezogen auf die genau zu dosierende Komponente angepasst werden. Besonders bei schlecht fließenden, aber genau zu dosierenden Komponenten (beispielsweise Arzneistoffe) kann die Tatsache ausgenutzt werden, dass bei den nachzudosierenden Komponenten (Hilfsstoffe) zumeist ein größerer Freiheitsgrad bezüglich Fließfähigkeit bzw. Dosiergenauigkeit besteht. Dies erfolgt erfindungsgemäß dadurch, dass die Zielkomponente zu einem Zielwert dosiert wird, der dem gewünschten Sollwert entspricht, wobei zunächst eine weitere nachzudosierende Komponente zu einem Zielwert dosiert wird, der geringer ist als ein gewünschter Sollwert der nachzudosierenden Komponente. Anschließend wird ein Gehalt der Zielkomponente berechnet in Abhängigkeit von dem tatsächlichen Wert der Zielkomponente und/oder dem tatsächlichen Wert der nachzudosierenden Komponente. Der Gehalt wird mit dem Grenzwert oder einem Toleranzband verglichen, wobei bei Überschreiten des Grenzwerts oder des Toleranzbandes eine weitere Dosierung zumindest der nachzudosierenden Komponente erfolgt. Besonders bevorzugt ist der Gehalt ein absoluter Wert, insbesondere der ermittelte tatsächliche Wert der Zielkomponente, oder ein relativer Wert, insbesondere der ermittelte tatsächliche Wert bezogen auf eine Summe des ermittelten tatsächlichen Werts und der Zielkomponente und des ermittelten tatsächlichen Wert der nachzudosierenden Komponente.

In einer zweckmäßigen Weiterbildung wird zunächst noch eine weitere nachzudosierende Komponente zu einem Zielwert der weiteren nachzudosierenden Komponente dosiert, wobei der Zielwert der weiteren nachzudosierenden Komponente geringer ist als ein gewünschter Sollwert der weiteren nachzudosierenden Komponente. Damit erhöht sich die Flexibilität durch die Dosierung mehrerer Komponenten entsprechend. Besonders bevorzugt wird bei einer Abweichung des Gehalts von dem Grenzwert oder Toleranzband auch die weitere nachzudosierende Komponente erneut nachdosiert.

In einer zweckmäßigen Weiterbildung kann bei einer Abweichung des Gehalts von dem Grenzwert oder Toleranzband auch die Zielkomponente erneut dosiert werden. Damit erhöht sich die Flexibilität, je nach noch nicht zufriedenstellend der Dosierung in der erforderlichen Weise eingreifen zu können, ohne die erfolgte Dosierung verwerfen zu müssen.

In einer zweckmäßigen Weiterbildung wird bei einer Abweichung des Gehalts von dem Grenzwert oder Toleranzband der Zielwert der nachzudosierenden Komponente neu ermittelt. Bevorzugt wird der Zielwert in Abhängigkeit vom Sollwert und/oder Istwert der Zielkomponente, besonders bevorzugt in Abhängigkeit von einem Faktor aus dem Quotienten von Sollwert und Istwert der Zielkomponente sowie insbesondere multipliziert mit einem Istwert der nachzudosierenden Komponente neu ermittelt. Damit kann die nach Dosierung auch bei einer Unterdosierung der Zielkomponente durchgeführt werden. Damit kann besonders einfach die Korrektur zugunsten eines präzisen Verhältnisses vorgenommen werden.

Weitere zweckmäßige Weiterbildungen ergeben sich aus weiteren abhängigen Ansprüchen und aus der Beschreibung.

Kurzbeschreibung der Figuren

Unter Bezugnahme auf die beigefügten Figuren werden Ausführungsformen der Erfindung im Detail beschrieben. Es zeigen:

Figur 1    eine schematische Übersicht einer möglichen Vorrichtung zur Durchführung des Verfahrens zur Dosierung einer Zielkomponente sowie

Figur 2    ein Flussdiagramm des erfindungsgemäßen Verfahrens zur Dosierung einer Zielkomponente.

Bevorzugte Ausführungsformen der Erfindung

Nachfolgend werden unter Bezugnahme auf die Figuren die Ausführungsbeispiele der Erfindung im Detail beschrieben.

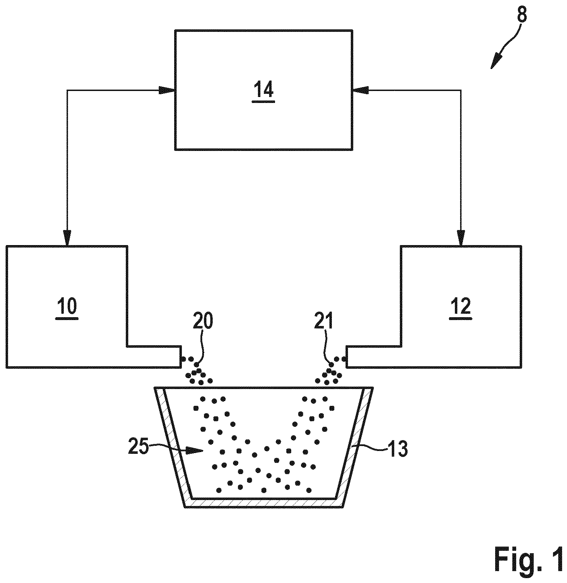

Figur 1 zeigt eine Vorrichtung 8 zum Dosieren einer Zielkomponente 20. Die Vorrichtung 8 umfasst zumindest ein Dosiersystem 10 sowie ein weiteres Dosiersystem 12, welche unterschiedliche Komponenten, insbesondere eine Zielkomponente 20 sowie zumindest eine weitere nachzudosierende Komponente 21, 22, 23 zu einer Mischung 25 in einem Empfangsbehälter 13 bzw. Mischer eindosieren. Bei den Dosiersystemen 10, 12 handelt es sich beispielsweise um Schneckendosierer, vorzugsweise gravimetrische Doppelschneckendosierer. Auch andere Dosiersysteme 10,12 können je nach Anwendungsfall vorgesehen werden. Der Empfangsbehälter 13 kann zugleich auch eine Mischfunktion beinhalten, so dass die eindosierten Komponenten 20, 21 zugleich auch vermischt werden.

Eine Steuerung 14 steuert das Dosiersystem 10 an. Eine Steuerung 14 beaufschlagt die jeweiligen Dosiersysteme 10, 12 mit Zielwerten Z20, Z21, Z22, Z23. die Zielwerte Z20, Z21, Z22, Z23 dienen den jeweiligen Dosiersystemen 10, 12 als Sollwerte für den nächsten Dosiervorgang. Der Zielwert Z20 der Zielkomponente 20 entspricht dem gewünschten Sollwert S20 soll der Zielkomponente 20. Die Zielwerte Z21, Z22, Z23 der nachzudosierenden Komponente 21 bzw. der nachzudosierenden Komponenten 21, 22, 23 hingegen ist/sind geringer gewählt als der gewünschte Sollwert S21soll, S22soll, S23soll der jeweiligen nachzudosierenden Komponente 21, 22, 23.

Nach dem Dosiervorgang erhält die Steuerung 14 die IstWerte bzw. die tatsächlichen Werte G20ist der Zielkomponente 20 sowie den/die tatsächliche(n) Wert(e) G21ist, G22ist, G23ist der nachzudosierenden Komponente 21 bzw. der nachzudosierenden Komponenten 21, 22, 23. Bei den tatsächlichen Werten G20ist, G21ist, G22ist, G23ist handelt es sich insbesondere um das Ist-Gewicht oder ein entsprechendes Maß für das Gewicht wie das Volumen oder Ähnliches. Der tatsächliche Wert G20ist, G21ist, G22ist, G23ist kann beispielsweise durch das jeweilige Dosiersystem 10, 12 bereitgestellt werden. Alternativ können auch entsprechende Erfassungsmittel wie Waagen oder ähnliches vorgesehen sein. Die Steuerung 14 empfängt die tatsächlichen Werte G20ist, G21ist, G22ist, G23ist der Dosiersysteme 10, 12. Die Steuerung 14 ermittelt ein Gehalt A der Zielkomponente 20. Bei dem Gehalt A kann es sich um einen absoluten Wert oder um einen relativen Wert, bezogen dann auf beispielsweise einen Gesamtwert wie das Gesamtgewicht der Zielkomponente 20 sowie der weiteren nachzudosierenden Komponente 21 bzw. der weiteren nachzudosierenden Komponenten 21,22, 23, handeln. Der Gehalt A wird somit in Abhängigkeit von dem tatsächlichen Wert G20ist der Zielkomponente 20 und/oder dem tatsächlichen Wert G21ist der nachzudosierenden Komponente 21 bzw. der weiteren nachzudosierenden Komponenten 22, 23 ermittelt. Der Gehalt A wird mit einem Grenzwert T bzw. einem Toleranzband verglichen. Befindet sich der Gehalt A innerhalb der zulässigen Toleranz bzw. innerhalb des zulässigen Grenzwerts T, so erfolgt keine weitere Nachdosierung. Andernfalls erfolgt eine Nachdosierung zumindest der nachzudosierenden Komponenten 21, 22, 23. Hierzu werden dann neue Zielwerte Z21, Z22, Z23 ermittelt, mit denen die nachzudosierenden Komponenten 21, 22, 23 nachdosiert werden. Diese neuen Zielwerte Z21, Z22, Z23 gelangen als Sollwerte an das Dosiersystem 12, welches dann die nachzudosierenden Komponenten 21, 22, 23 entsprechend nachdosiert. Alternativ könnte neben der nachzudosierenden Komponente 21, 22, 23 auch die Zielkomponente 20 erneut dosiert werden.

Die Steuerung 14 ist im Zusammenspiel mit einem automatischen Dosiersystem 10, 12 in der Lage, Werte aus einer oder mehreren externen Quellen aufzunehmen, zu verarbeiten und Stellbefehle (beispielsweise in Form von entsprechenden Sollwerten) auszugeben. Diese aufzunehmenden Werte können aus einem anderen Softwareprogramm (beispielsweise HMI/Rezeptverwaltung), einer Steuerung (beispielsweise eine speicherprogrammierbare Steuerung für die Dosierung oder aus der speicherprogrammierbaren Steuerung der Gesamtanlage) kommen. Alternativ könnten die aufzunehmenden Werte in einem Modul von einem Benutzer selbst manuell eingetragen werden. Als Beispiel für aufzunehmende Werte sind beispielsweise Soll/Ist-Werte, insbesondere Soll/Ist-Gewichte, erlaubte Toleranzen T oder das maximale Gesamtgewicht zu nennen. Als Stellbefehle können die Übertragung von neuen Sollwerten Z20, Z21, Z22, Z23 an die Dosiersysteme 10, 12 verstanden werden.

Die aufgenommenen Werte tatsächlichen Werte G20ist, G21ist, G22ist, G23ist können durch die Steuerung 14 verarbeitet werden. Hierbei ermittelt die Steuerung 14 beispielsweise eine Abweichung des Istwerts vom Sollwert, beispielsweise die Abweichung vom Ist-Gewicht zum Soll-Gewicht. Auch könnte die Steuerung 14 einzelne Werte gegen vorgegebene Toleranzen überprüfen. Ebenfalls könnte die Steuerung 14 das Gesamtgewicht ermitteln.

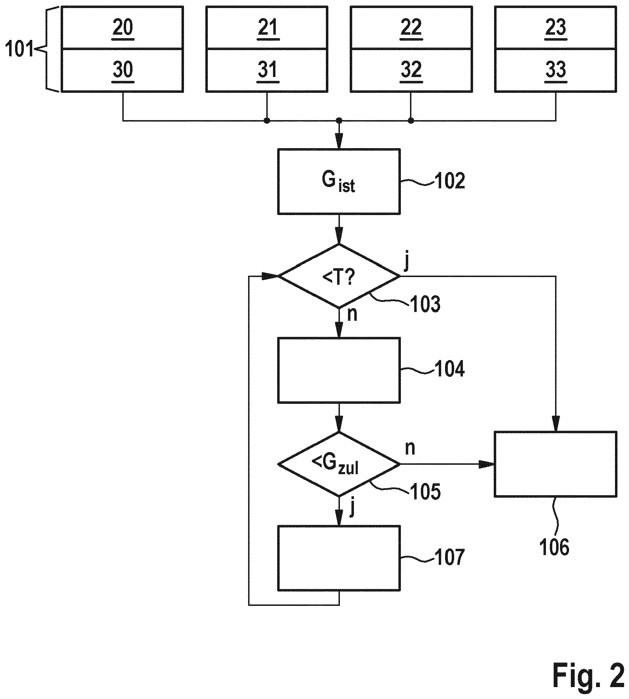

Das Verfahren ersetzt einen herkömmlichen Dosierprozess, bei dem üblicherweise alle Komponenten gleichzeitig und zu 100 % dosiert werden. Bei dem vorliegenden Verfahren wird lediglich die Zielkomponente 20 auf den gewünschten Zielwert Z20 (100 %) dosiert, die anderen nachzudosierenden Komponenten 21, 22, 23 jedoch zu einem geringeren Prozentsatz bezogen auf den Zielwert Z21, Z22, Z23 wie beispielsweise das Soll-Gewicht S21soll, S22soll, S23soll. Diese Vorgehensweise stellt sicher, dass die Nachdosierung auch bei einer Unterdosierung der Zielkomponente 20 durchgeführt werden kann. Wahlweise kann jedoch auch ein Minimum von 100 % für die Zielkomponente Z20 festgelegt werden, sodass die Zielkomponente Z20 so lange dosiert wird, bis 100 % des Soll-Gewichts mindestens erreicht werden und somit die Nachdosierung nicht zu einer Unterschreitung eines bestimmten Soll-Gewichts S20soll, S21soll, S22soll, S23soll einer oder aller Komponenten führt. Das Verfahren läuft beispielhaft ab wie in Verbindung mit Figur 2 beschrieben.

In dem Flussdiagramm gemäß Figur 2 erfolgt in einem ersten Schritt 101 ein Dosieren der Zielkomponente 20 im Rahmen einer Dosierung 30 zu einem gewünschten Zielwert Z20, beispielsweise 100 % bezogen auf den gewünschten Sollwert S20soll (beispielsweise Zielgewicht). Neben der Zielkomponente 20 wird zumindest eine weitere Komponente 21 dosiert. Diese nachzudosierende Komponente 21 wird zunächst mit einem Zielwert Z21 mit einem geringeren Wert, beispielsweise 90 %, bezogen auf den angestrebten Sollwert Ssoll21, eindosiert. Dies erfolgt bei einer Dosierung 31 der nachzudosierenden Komponente 21.

Im Ausführungsbeispiel werden noch weitere nachzudosierende Komponenten 22, 23 dosiert. So wird eine weitere nachzudosierende Komponente 22 zunächst zu einem geringeren Zielwert Z22, beispielsweise 90 %, bezogen auf den angestrebten Sollwert S22soll, eindosiert durch eine Dosierung 32 der nachzudosierenden Komponente 22.

Auch eine weitere nachzudosierende Komponente 23 wird zunächst mit einem geringeren Zielwert Z23, beispielsweise 90 % bezogen auf den angestrebten Sollwert S23soll, eindosiert durch eine Dosierung 33 der nachzudosierenden Komponente 23.

Wesentlich ist, dass lediglich die Zielkomponente 20 auf den Zielwert Z20 von 100% bezogen auf den Sollwert S20soll hin eindosiert wird, während die anderen nachzudosierenden Komponenten 21, 22, 23 zu einem geringeren Zielwert Z21, Z22, Z23 (beispielsweise wie im Ausführungsbeispiel zu 90%) bezogen auf den Sollwert S21soll, S22soll, S23soll, insbesondere Soll-Gewicht, eindosiert werden. Diese Vorgehensweise stellt sicher, dass die Nachdosierung auch bei einer Unterdosierung der Zielkomponente 20 durchgeführt werden kann. Wahlweise kann jedoch auch ein Minimum von 100 % für die Zielkomponente 20 festgelegt werden, sodass die Zielkomponente 20 so lange dosiert wird, bis 100 % des Soll-Gewichts mindestens erreicht werden und somit die Nachdosierung nicht zu einer Unterschreitung eines bestimmten Soll-Gewichts einer oder aller Komponenten führt.

Ist der Dosierschritt 101 abgeschlossen, werden in einem Schritt 102 die tatsächlichen Werte bzw. Istwerte, im Ausführungsbeispiel die tatsächlich dosierten Gewichte G20ist der Zielkomponente 20 bzw. G21ist, G22ist, G23ist der nachzudosierenden Komponenten 21, 22, 23, aufgenommen. Auf Basis der ermittelten Istwerte G20ist, G21ist, G22ist, G23ist wird der Gehalt A der Zielkomponente 20 berechnet (absolut oder in Prozent).

In einem Schritt 103 wird der Gehalt A der Zielkomponente 20 mit einem Grenzwert T bzw. Bereich (Minimalwert/Maximalwert) verglichen. Befindet sich der Gehalt A innerhalb der vorgegebenen Toleranz T bzw. unterhalb des Grenzwerts T, wird der Dosiervorgang beendet, Schritt 106. Somit kommt es nicht zur Nachdosierung.

Befindet sich der Gehalt der Zielkomponente 20 außerhalb der Toleranz T, so werden neue Zielwerte Z21, Z22, Z23 für die nachzudosierenden Komponenten 21, 22, 23 berechnet, Schritt 104, und als neuer Stellbefehl an die entsprechenden Dosiersysteme 12 übermittelt.

Die Ermittlung neuer Zielwerte nach Schritt 104 geschieht beispielsweise wie folgt:
Faktor f für das Nachdosieren:

$$f = G20ist/S20soll$$

Neues zulässiges Gesamtgewicht Gzul bzw. Gges (für Abfrage 105):

$$Gges = f * \Sigma (S20soll + S21soll + S22soll + S23soll)$$

Die neuen Zielwerte Z21, Z22, Z23 (für Schritt 104) der nachzudosierenden Komponente(n) 21, 22, 23:

$$Zn = f * Gnist \text{ (also: } Z21 = f*G21ist; Z22 = f*G22ist;$$

$$Z23 = f*G23ist)$$

Sofern das Gesamtgewicht Gzul (bzw. das neue Gesamtgewicht Gges wie oben beschrieben) noch unterschritten ist (Abfrage 105), wird der Nachdosiervorgang gemäß Schritt 107 gestartet. Wiederum werden die tatsächlichen Werte G21ist, G22ist, G23ist der nachzudosierenden Komponenten 21, 22, 23, bzw. gegebenenfalls der tatsächliche Wert G20ist der Zielkomponente 20 abgefragt (Schritt 102). Wiederum wird in Schritt 103 überprüft, ob sich der Gehalt A der Zielkomponente 20 innerhalb eines Bereichs T befindet. Die bereits beschriebenen Schritte 106 (falls innerhalb des zulässigen Toleranzbandes T) bzw. 104 (außerhalb des zulässigen Toleranzbandes T mit anschließender Nachdosierung) können sich anschließen. Alternativ könnte neben der nachzudosierenden Komponente 21, 22, 23 auch die Zielkomponente 20 erneut dosiert werden.

Bevorzugte Verwendung findet das beschriebene Verfahren in der Dosierung von Wirkstoffen als mögliche Zielkomponente 20 für Pharmazeutika. Jedoch auch andere Anwendungsmöglichkeiten, bei denen mehrere Komponenten dosiert werden und denkbar.

## Patentansprüche

1. Verfahren zum Dosieren einer Zielkomponente (20), wobei ein Dosiersystem (10) die Zielkomponente (20) zu einem Zielwert (Z20) dosiert, der einem gewünschten Sollwert (S20soll) entspricht, **dadurch gekennzeichnet, dass** ein weiteres Dosiersystem (12) zumindest eine weitere nachzudosierende, von der Zielkomponente verschiedene Komponente (21, 22, 23) zu einem Zielwert (Z21) der nachzudosierenden Komponente (21, 22, 23) dosiert, der geringer ist als ein gewünschter Sollwert (S21soll) der nachzudosierenden Komponente (21, 22, 23), wobei anschließend ein tatsächlicher Wert (G20ist) der Zielkomponente (20) und zumindest ein tatsächlicher Wert (G21ist) der nachzudosierenden Komponente (21, 22, 23) ermittelt werden, wobei anschließend ein Gehalt (A) der Zielkomponente (20) berechnet wird in Abhängigkeit von dem tatsächlichen Wert (G20ist) der Zielkomponente (20) und/oder dem tatsächlichen Wert (G21ist) der nachzudosierenden Komponente (21, 22, 23) und der Gehalt (A) mit einem Grenzwert (T) oder Toleranzband (T) verglichen wird, wobei bei Überschreiten des Grenzwerts (T) oder Toleranzbands (T) eine weitere Dosierung zumindest der nachzudosierenden Komponente (21, 22, 23) erfolgt.

2. Verfahren nach Anspruch 1, **dadurch gekennzeichnet, dass** der Gehalt (A) ein absoluter Wert (G20ist), insbesondere der ermittelte tatsächliche Wert (G20ist) der Zielkomponente (20), oder ein relativer Wert, insbesondere der ermittelte tatsächliche Wert (G20ist) bezogen auf eine Summe des ermittelten tatsächlichen Werts (G20ist) der Zielkomponente (20) und des ermittelten tatsächlichen Wertes (G20ist) der nachzudosierenden Komponente (21,22, 23), ist.

3. Verfahren nach einem der vorhergehenden Ansprüche, **dadurch gekennzeichnet, dass** zunächst noch eine weitere nachzudosierende Komponente (22,23) zu einem Zielwert (Z22, Z23) der weiteren nachzudosierenden Komponente (22,23) dosiert wird, wobei der Zielwert (Z22, Z23) der weiteren nachzudosierenden Komponente (22,23) geringer ist als ein gewünschter Sollwert (S22soll, S23soll) der weiteren nachzudosierenden Komponente (22,23).

4. Verfahren nach einem der vorhergehenden Ansprüche, **dadurch gekennzeichnet, dass** bei einer Abweichung des Gehalts (A) von dem Grenzwert (T) oder Toleranzband (T) auch die weitere nachzudosierende Komponente (22,23) erneut dosiert wird.

5. Verfahren nach einem der vorhergehenden Ansprüche, **dadurch gekennzeichnet, dass** bei einer Abweichung des Gehalts (A) von dem Grenzwert (T) oder Toleranzband (T) auch die Zielkomponente (20) erneut dosiert wird.

6. Verfahren nach einem der vorhergehenden Ansprüche, **dadurch gekennzeichnet, dass** zumindest eine der nachzudosierenden Komponenten (21,22, 23) so lange nachdosiert wird, bis der Gehalt (A) den Grenzwert (T) oder das Toleranzband (T) nicht überschreitet.

7. Verfahren nach einem der vorhergehenden Ansprüche, **dadurch gekennzeichnet, dass** bei einer Abweichung des Gehalts (A) von dem Grenzwert (T) oder Toleranzband (T) der Zielwert (Z21, Z22, Z23) der nachzudosierenden Komponente (21, 22, 23) neu ermittelt wird.

8. Verfahren nach einem der vorhergehenden Ansprüche, **dadurch gekennzeichnet, dass** der Zielwert (Z21, Z22, Z23) der nachzudosierenden Komponente (21, 22, 23) neu ermittelt wird in Abhängigkeit von dem Sollwert (S20soll) und/oder dem Istwert (G20ist) der Zielkomponente (20).

9. Verfahren nach einem der vorhergehenden Ansprüche, **dadurch gekennzeichnet, dass** der Zielwert (Z21, Z22, Z23) der nachzudosierenden Komponente (21, 22, 23) neu ermittelt wird in Abhängigkeit von in einem Faktor (f) aus dem Quotienten von Sollwert (S20soll) und Istwert (G20ist) der Zielkomponente (20).

**10.** Verfahren nach einem der vorhergehenden Ansprüche, **dadurch gekennzeichnet, dass** der Zielwert (Z21, Z22, Z23) der nachzudosierenden Komponente (21, 22, 23) neu ermittelt wird in Abhängigkeit von dem Faktor (f) multipliziert mit einem Istwert (G21ist, G22ist, G23ist) der nachzudosierenden Komponente (21, 22, 23).

**11.** Verfahren nach einem der vorhergehenden Ansprüche, **dadurch gekennzeichnet, dass** ein neuer Grenzwert (Gges, Gzul) ermittelt wird in Abhängigkeit von dem Sollwert (S20soll) und/oder dem Istwert (S20ist) der Zielkomponente (20).

**12.** Verfahren nach einem der vorhergehenden Ansprüche, **dadurch gekennzeichnet, dass** nach einem weiteren Nachdosieren der nachzudosierenden Komponente (21,22, 23) der tatsächliche Wert (G21ist, G22ist, G23ist) der nachzudosierenden Komponente (21,22, 23) erneut ermittelt wird und in Abhängigkeit von dem erneut ermittelten tatsächlichen Wert (G21ist, G22ist, G23ist) der Gehalt (A) bestimmt wird.

**13.** Verfahren nach einem der vorhergehenden Ansprüche, **dadurch gekennzeichnet, dass** als Sollwert und/oder als tatsächlicher Wert das Gewicht oder das Volumen verwendet wird.

**14.** Verfahren nach einem der vorhergehenden Ansprüche, **dadurch gekennzeichnet, dass** als Zielkomponente (20) ein Wirkstoff eines Pharmazeutikums verwendet wird.

**Claims**

**1.** A method for dosing a target component (20), wherein a dosing system (10) doses the target component (20) to a target value (Z20) which corresponds to a desired nominal value (S20soll), **characterized in that** a further dosing system (12) doses at least one further component (21, 22, 23) different from the target component for after-dosing to a target value (Z21) of the component (21, 22, 23) for after-dosing which is lower than a desired nominal value (S21soll) of the component (21, 22, 23) for after-dosing, wherein then an actual value (G20ist) of the target component (20) and at least one actual value (G21ist) of the component (21, 22, 23) for after-dosing are determined, wherein then a content (A) of the target component (20) is calculated depending on the actual value (G20ist) of the target component (20) and/or the actual value (G21ist) of the component (21, 22, 23) for after-dosing, and the content (A) is compared to a limit value (T) or tolerance band (T), wherein if the limit value (T) or tolerance band (T) is exceeded, at least the component (21, 22, 23) for after-dosing is dosed again.

**2.** The method as claimed in claim 1, **characterized in that** the content (A) is an absolute value (G20ist), in particular the determined actual value (G20ist) of the target component (20), or a relative value, in particular the determined actual value (G20ist) in relation to a sum of the actual determined value (G20ist) of the target component (20) and the determined actual value (G20ist) of the component (21, 22, 23) for after-dosing.

**3.** The method as claimed in any of the preceding claims, **characterized in that** firstly another further component (22, 23) for after-dosing is dosed to a target value (Z22, Z23) of the further component (22, 23) for after-dosing, wherein the target value (Z22, Z23) of the further component (22, 23) for after-dosing is lower than a desired nominal value (S22soll, S23soll) of the further component (22, 23) for after-dosing.

**4.** The method as claimed in any of the preceding claims, **characterized in that** if the content (A) deviates from the limit value (T) or tolerance band (T), the further component (22, 23) for after-dosing is dosed again.

**5.** The method as claimed in any of the preceding claims, **characterized in that** if the content (A) deviates from the limit value (T) or tolerance band (T), the target component (20) is also dosed again.

**6.** The method as claimed in any of the preceding claims, **characterized in that** at least one of the components (21, 22, 23) for after-dosing is after-dosed until the content (A) does not exceed the limit value (T) or tolerance band (T).

**7.** The method as claimed in any of the preceding claims, **characterized in that** if the content (A) deviates from the limit value (T) or tolerance band (T), the target value (Z21, Z22, Z23) of the component (21, 22, 23) for after-dosing is determined again.

**8.** The method as claimed in any of the preceding claims, **characterized in that** the target value (Z21, Z22, Z23) of the component (21, 22, 23) for after-dosing is determined again depending on the nominal value (S20soll) and/or the actual value (G20ist) of the target component (20).

9. The method as claimed in any of the preceding claims, **characterized in that** the target value (Z21, Z22, Z23) of the component (21, 22, 23) for after-dosing is determined again depending on a factor (f) of the quotient of the nominal value (S20soll) and actual value (G20ist) of the target component (20) .

10. The method as claimed in any of the preceding claims, **characterized in that** the target value (Z21, Z22, Z23) of the component (21, 22, 23) for after-dosing is determined again depending on the factor (f) multiplied by an actual value (G21ist, G22ist, G23ist) of the component (21, 22, 23) for after-dosing.

11. The method as claimed in any of the preceding claims, **characterized in that** a new limit value (Gges, Gzul) is determined depending on the nominal value (S20soll) and/or the actual value (S20ist) of the target component (20).

12. The method as claimed in any of the preceding claims, **characterized in that** after a further after-dosing of the component (21, 22, 23) for after-dosing, the actual value (G21ist, G22ist, G23ist) of the component (21, 22, 23) for after-dosing is determined again and the content (A) is determined depending on the newly determined actual value (G21ist, G22ist, G23ist).

13. The method as claimed in any of the preceding claims, **characterized in that** the weight or volume is used as the nominal value and/or actual value.

14. The method as claimed in any of the preceding claims, **characterized in that** an active substance of a pharmaceutical product is used as a target component (20).

**Revendications**

1. Procédé de dosage d'un composant cible (20), dans lequel un système de dosage (10) dose le composant cible (20) à une valeur cible (Z20), qui correspond à une valeur de consigne souhaitée (S20soll), **caractérisé en ce qu'**un système de dosage supplémentaire (12) dose au moins un composant supplémentaire (21, 22, 23) à doser ensuite, qui est différent du composant cible, à une valeur cible (Z21) du composant (21, 22, 23) à doser ensuite, qui est inférieure à une valeur de consigne souhaitée (S21soll) du composant (21, 22, 23) à doser ensuite, dans lequel une valeur réelle (G20ist) du composant cible (20) et au moins une valeur réelle (G21ist) du composant (21, 22, 23) à doser ensuite sont déterminées ensuite, dans lequel une teneur (A) du composant cible (20) est ensuite calculée en fonction de la valeur réelle (G20ist) du composant cible (20) et/ou de la valeur réelle (G21ist) du composant (21, 22, 23) à doser ensuite, et la teneur (A) est comparée à une valeur limite (T) ou à une bande de tolérance (T), dans lequel un dosage supplémentaire d'au moins le composant (21, 22, 23) à doser ensuite survient en cas de dépassement de la valeur limite (T) ou de la bande de tolérance (T).

2. Procédé selon la revendication 1, **caractérisé en ce que** la teneur (A) est une valeur absolue (G20ist), en particulier la valeur réelle déterminée (G20ist) du composant cible (20), ou une valeur relative, en particulier la valeur réelle déterminée (G20ist) par rapport à une somme de la valeur réelle déterminée (G20ist) du composant cible (20) et de la valeur réelle déterminée (G20ist) du composant (21, 22, 23) à doser ensuite.

3. Procédé selon l'une quelconque des revendications précédentes, **caractérisé en ce qu'**un composant supplémentaire (22, 23) à doser ensuite est d'abord dosé à une valeur cible (Z22, Z23) du composant supplémentaire (22, 23) à doser ensuite, dans lequel la valeur cible (Z22, Z23) du composant supplémentaire (22, 23) à doser ensuite est inférieure à une valeur de consigne souhaitée (S22soll, S23soll) du composant supplémentaire (22, 23) à doser ensuite.

4. Procédé selon l'une quelconque des revendications précédentes, **caractérisé en ce qu'**en cas d'écart de la teneur (A) par rapport à la valeur limite (T) ou à la bande de tolérance (T), le composant supplémentaire (22, 23) à doser ensuite est également dosé à nouveau.

5. Procédé selon l'une quelconque des revendications précédentes, **caractérisé en ce qu'**en cas d'écart de la teneur (A) par rapport à la valeur limite (T) ou à la bande de tolérance (T), le composant cible (20) est également dosé à nouveau.

6. Procédé selon l'une quelconque des revendications précédentes, **caractérisé en ce qu'**au moins l'un des composants (21, 22, 23) à doser ensuite est dosé ensuite jusqu'à ce que la teneur (A) ne dépasse pas la valeur limite (T) ou la bande de tolérance (T).

7. Procédé selon l'une quelconque des revendications précédentes, **caractérisé en ce qu'**en cas d'écart de la teneur (A) par rapport à la valeur limite (T) ou à la bande de tolérance (T), la valeur cible (Z21, Z22, Z23) du composant (21, 22, 23) à doser ensuite est déterminée à nouveau.

8. Procédé selon l'une quelconque des revendications précédentes, **caractérisé en ce que** la valeur cible (Z21, Z22, Z23) du composant (21, 22, 23) à doser ensuite est déterminée à nouveau en fonction de la valeur de consigne (S20soll) et/ou de la valeur actuelle (G20ist) du composant cible (20).

9. Procédé selon l'une quelconque des revendications précédentes, **caractérisé en ce que** la valeur cible (Z21, Z22, Z23) du composant (21, 22, 23) à doser ensuite est déterminée à nouveau en fonction d'un facteur (f) à partir du quotient de la valeur de consigne (S20soll) et de la valeur actuelle (G20ist) du composant cible (20).

10. Procédé selon l'une quelconque des revendications précédentes, **caractérisé en ce que** la valeur cible (Z21, Z22, Z23) du composant (21, 22, 23) à doser ensuite est déterminée à nouveau en fonction du facteur (f) multiplié par une valeur actuelle (G21ist, G22ist, G23ist) du composant (21, 22, 23) à doser ensuite.

11. Procédé selon l'une quelconque des revendications précédentes, **caractérisé en ce qu'**une nouvelle valeur limite (Gges, Gzul) est déterminée en fonction de la valeur de consigne (S20soll) et/ou de la valeur actuelle (S20ist) du composant cible (20).

12. Procédé selon l'une quelconque des revendications précédentes, **caractérisé en ce qu'**après un nouveau dosage ultérieur du composant (21, 22, 23) à doser ensuite, la valeur réelle (G21ist, G22ist, G23ist) du composant (21, 22, 23) à doser ensuite est déterminée à nouveau et la teneur (A) est déterminée en fonction de la valeur réelle déterminée à nouveau (G21ist, G22ist, G23ist).

13. Procédé selon l'une quelconque des revendications précédentes, **caractérisé en ce que** le poids ou le volume est utilisé comme valeur de consigne et/ou comme valeur réelle.

14. Procédé selon l'une des revendications précédentes, **caractérisé en ce qu'**un principe actif d'un produit pharmaceutique est utilisé comme composant cible (20).

EP 3 917 839 B1

Fig. 1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009199186 A1
- DE 102006054604 A1